# EUROPÄISCHE PATENTSCHRIFT

(11) **EP 4 060 947 B1**
(45) Veröffentlichungstag und Bekanntmachung des Hinweises auf die Patenterteilung: **14.08.2024**
(21) Anmeldenummer: 21162798.9
(22) Anmeldetag: 16.03.2021
(51) Int. Cl.: H04L 9/40, H04L 12/46

(54) **AUTHENTIFIZIEREN EINES KNOTENS IN EINEM KOMMUNIKATIONSNETZ EINER AUTOMATISIERUNGSANLAGE**
AUTHENTIFICATION OF A NODE IN A COMMUNICATION NETWORK OF AN AUTOMATION SYSTEM
AUTHENTIFICATION D'UN NOEUD DANS UN RÉSEAU DE COMMUNICATION D'UNE INSTALLATION D'AUTOMATISATION

(43) Veröffentlichungstag der Anmeldung: 21.09.2022
(73) Patentinhaber: Siemens Aktiengesellschaft, 80333 München (DE)
(72) Erfinder: Görbing, Andrej, 10318 Berlin (DE); Hurrelmann, Jonas, 13347 Berlin (DE)
(74) Vertreter: Siemens Patent Attorneys

(56) Entgegenhaltungen:
- DE-A1- 102006 038 592
- US-A1- 2006 036 856
- US-A1- 2011 200 026
- US-A1- 2016 219 051

## Beschreibung

Die Erfindung betrifft ein Verfahren zum Authentifizieren von Knoten in einem Kommunikationsnetz einer Automatisierungsanlage, bei dem eine jeweilige die Geräte angebende Authentifizierungsinformation an einen Authentifizierungsserver übertragen wird und der Authentifizierungsserver basierend auf der Authentifizierungsinformation die Geräte als Teilnehmer in dem Kommunikationsnetz zulässt oder ablehnt.

Die Erfindung betrifft einerseits auch einen Knoten zum Anschluss an ein Kommunikationsnetz einer Automatisierungsanlage sowie andererseits ein Kommunikationsnetz mit einem solchen Knoten.

Kommunikationsfähige Geräte (im Folgenden auch als "Knoten" bezeichnet), also elektronische Geräte, die an ein Kommunikationsnetz angeschlossen werden können und über dieses mit anderen elektronischen Geräten Daten durch Übertragung entsprechender Datentelegramme bzw. Nachrichten austauschen, werden heutzutage in vielen Bereichen der Technik, z.B. bei der Automatisierung von Anlagen, eingesetzt. Ein Beispiel für den Einsatz solcher Knoten in einem Kommunikationsnetz ist eine Automatisierungsanlage, in der netzwerkfähige Automatisierungsgeräte (im Folgenden auch schlicht als "Geräte" bzw. "elektronische Geräte" bezeichnet) über Ethernet Bridges des Kommunikationsnetzes miteinander zum Austausch von Datentelegrammen verbunden sind. Die Knoten eines solchen Kommunikationsnetzes werden folglich durch dessen elektronische Geräte und Ethernet Bridges gebildet. Automatisierungsanlagen dienen zur Automatisierung von Systemen, z.B. elektrischen Energieversorgungsnetzen oder elektrischen Schaltanlagen, und umfassen üblicherweise Automatisierungsgeräte (z.B. sogenannte Feldgeräte), die in der Nähe von Primärkomponenten der entsprechenden Anlage, also z.B. des elektrischen Energieversorgungsnetzes, angeordnet sind. Solche Primärkomponenten können im Falle eines elektrischen Energieversorgungsnetzes beispielsweise elektrische Kabel und Leitungen, Transformatoren, Generatoren, Motoren oder Umrichter sein. Bei den Automatisierungsgeräten kann es sich beispielsweise um sogenannte elektrische Schutzgeräte oder Feldleitgeräte handeln, die in Unterstationen elektrischer Energieversorgungsnetze installiert sind. In der Fachsprache werden solche Automatisierungsgeräte oft auch als sogenannte "IEDs" ("Intelligent Electronic Devices") bezeichnet. Die Automatisierungsgeräte sind hierbei mit dem Kommunikationsnetz verbunden und tauschen darüber Datentelegramme aus, die als Nutzdaten beispielsweise Steuerbefehle, Meldungen über Ereignisse (z. B. Schwellenwertverletzungen), Messwerte oder Statusmeldungen umfassen.

Häufig stellen Automatisierungsanlagen sicherheitskritische Systeme dar, die gegen unbefugte Eingriffe und Manipulationen zu schützen sind. Daher dürfen in den Kommunikationsnetzen solcher Automatisierungsanlagen üblicherweise nur solche Knoten miteinander Daten austauschen, die zuvor eine Registrierung durchlaufen haben, bei der einerseits ihre Identität festgestellt wird und andererseits ihre Befugnis, in dem Kommunikationsnetz Daten auszutauschen von einer übergeordneten Stelle festgestellt wird. Dieser Vorgang wird auch als "Authentifizierung" bezeichnet.

Es sind verschiedene Verfahren bekannt, wie eine Authentifizierung eines Knotens in einem Kommunikationsnetz erfolgen kann. So definiert der Standard IEEE 802.1X ein Authentifizierungsprotokoll, mit dem sichergestellt werden kann, dass nur autorisierte Knoten auf ein Kommunikationsnetz (z.B. auf ein LAN) über freigeschaltete Kommunikationsports ("access ports") von Zugangspunkten, wie z.B. Ethernet Bridges, zugreifen können. Diese portbasierte Authentifizierung nach IEEE 802.1X wird häufig in Kommunikationsnetzen der Informationstechnologie (IT) eingesetzt. Auch im Rahmen der Betriebstechnologie ("operation technology" - OT) findet ein Einsatz statt, das Verfahren stößt hier aber aufgrund spezifischer Besonderheiten bisweilen an seine Grenzen, wie später im Detail erläutert wird.

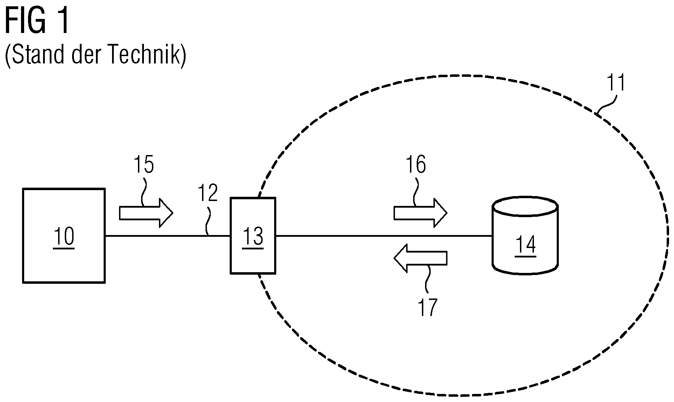

Figur 1 zeigt eine an die IEEE 802.1X-2020, Abschnitt 7.1, angelehnte Darstellung zur Erläuterung der Authentifizierung eines elektronischen Gerätes 10 zum Datenaustausch in einem Kommunikationsnetz 11. Das Gerät 10 ("host") ist hierbei über eine Punkt-zu-Punkt Verbindung 12 mit einem Zugangspunkt 13 ("access point") des Kommunikationsnetzes 11 verbunden. Bei dem Gerät 10 kann es sich zum Beispiel um einen Personalcomputer, ein kommunikationsfähiges Endgerät oder ein Automatisierungsgerät einer Automatisierungsanlage handeln. Der Zugangspunkt 13 kann beispielsweise durch eine Ethernet Bridge gebildet sein. Nachdem das Gerät 10 mit dem Zugangspunkt 13 verbunden und eingeschaltet worden ist, sendet das Gerät in der Rolle des "Supplicants" eine seine Authentifizierungsinformation enthaltende Nachricht 15 an den Zugangspunkt 13. Dies kann mittels des sogenannten "Extensible Authentication Protocol over LAN" (EAPOL) erfolgen. Der Zugangspunkt 13 nimmt in diesem Fall die Rolle des "Authenticators" an und leitet die Authentifizierungsinformation mit einer weiteren Nachricht 16 an einen Authentifizierungsserver 14 weiter, bei dem es sich z.B. um einen "Remote Authentication Dial-In User Service" (RADIUS) Server handeln kann. Die Weiterleitung der Authentifizierungsinformation kann beispielsweise mit einer sogenannten "Extensible Authentication Protocol" (EAP) Nachricht erfolgen, die in Nachrichten eines AAA-Protokolls (Authentifizierung, Autorisierung und Accounting) eingebettet ist, beispielsweise des RADIUS-Protokolls.

Der Authentifizierungsserver 14 prüft die Validität der empfangenen Authentifizierungsinformation. Dies kann beispielsweise dadurch erfolgen, dass geprüft wird, ob die empfangene Authentifizierungsinformation mit einer Referenz-Authentifizierungsinformation übereinstimmt, die beispielsweise in einer dem Authentifizierungsserver zugeordneten Datenbank enthalten sein kann. Eine Alternative besteht darin, zu prüfen, ob ein mit der Authentifizierungsinformation verknüpftes Zertifikat vertrauenswürdig ist. In Abhängigkeit vom Ergebnis der Prüfung antwortet der Authentifizierungsserver mit einer entsprechenden Nachricht 17 an den Zugangspunkt 13, die den Zugangspunkt dazu veranlasst, das Gerät entweder zum Kommunikationsnetz zuzulassen (erfolgreiche Authentifizierung) oder abzulehnen (fehlgeschlagene Authentifizierung). Der Zugangspunkt öffnet nach erfolgreicher Authentifizierung seinen Zugangs-Port und das nunmehr authentifizierte Gerät beginnt den Datenaustausch mit anderen Geräten im Kommunikationsnetz.

Auf diese Weise kann sichergestellt werden, dass sich nur autorisierte Geräte mit dem Kommunikationsnetz verbinden dürfen und das Kommunikationsnetz somit gegen Manipulation durch Dritte und andere Sicherheitsangriffe, z.B. "eaves dropping", "spoofing" oder "denial-of-service" geschützt wird.

Neben der Absicherung gegen Angriffe erfordern viele automatisiert betriebene Anlagen auch eine hohe Ausfallsicherheit. Diese Anforderung besitzt starke Auswirkungen auf das Kommunikationsnetz, mit dem die Geräte einer solchen Anlage miteinander verbunden sind. Daher werden solche Kommunikationsnetze üblicherweise redundant ausgelegt, d.h., dass auch bei dem Ausfall einer Kommunikationsverbindung innerhalb des Kommunikationsnetzes die zuverlässige Übertragung von Datentelegrammen zwischen den einzelnen Geräten gewährleistet ist. Der Begriff "Kommunikationsverbindung" soll im Folgenden die komplette Übertragungsstrecke zwischen den jeweiligen Geräten umfassen, also sowohl ein vorhandenes (drahtgebundenes oder drahtloses) Übertragungsmedium als auch dessen physikalische, kommunikationstechnische und logische Anbindung zu dem jeweiligen Gerät (z.B. Schnittstellen, Kommunikationseinrichtungen, Protokollstacks) umfassen. Daneben werden Anforderungen an die Zuverlässigkeit der Kommunikation im Kommunikationsnetz gerichtet, beispielsweise die Verhinderung kreisender Telegramme in ringförmigen Kommunikationsnetztopologien.

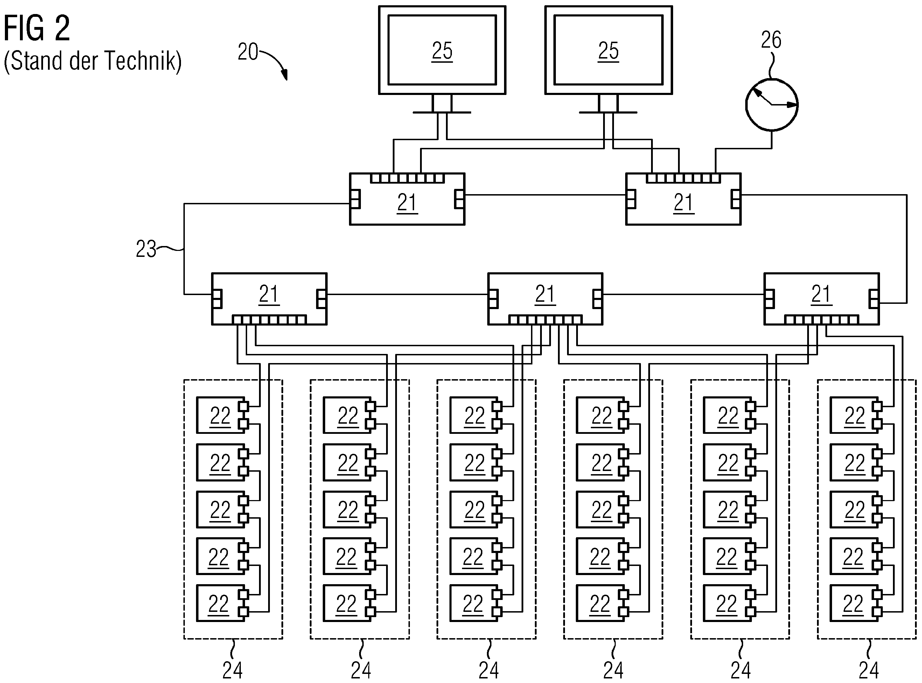

Eine Möglichkeit, ein Kommunikationsnetz zuverlässig und ausfallsicher auszugestalten und dabei auch im Falle einer Störung einer Kommunikationsverbindung einen weitgehend nahtlosen Weiterbetrieb der Automatisierungsanlage zu gewährleisten, ist im Standard IEEE 802.1Q als sogenanntes "Rapid Spanning Tree" Protokoll (RSTP) beschrieben. Ein Beispiel eines gemäß RSTP arbeitenden Kommunikationsnetzes 20, beispielsweise eines Kommunikationsnetzes in einer Unterstation eines Energieversorgungsnetzes, ist in Figur 2 gezeigt.

Das Kommunikationsnetz 20 der Figur 2 umfasst Knoten in Form von Ethernet Bridges 21 und elektronischen Geräten 22 (z.B. "intelligent electonic devices" IEDs), wobei jedes der Geräte 22 zwei Kommunikationsports aufweist. Die Ethernet Bridges 21 sind in einem Ring 23 angeordnet. Die Geräte 22 sind in mehreren Ketten 24 angeordnet, wobei jeweils das erste Gerät mit einer ersten Ethernet Bridge 21 und das letzte Gerät mit einer zweiten Ethernet Bridge 21 verbunden ist. Hierdurch bildet jede Kette 24 von Geräten 22 mit jeweils zwei Ethernet Bridges 21 einen eigenen Ring. Insgesamt entsteht hierdurch eine hierarchische Struktur mit mehreren Ringen, wobei der übergeordnete Ring 23 aus der Aneinanderreihung der Ethernet Bridges 21 besteht und die Ketten 24 jeweils untergeordnete Ringe darstellen, die jeweils aus mehreren Geräten 22 und zwei Ethernet Bridges 21 gebildet werden. Mit dem übergeordneten Ring 23 können zur Datenkommunikation in dem Kommunikationsnetz 20 weitere Geräte wie Workstations 25, Zeitgeber 26 etc. verbunden sein.

Die Geräte 22 implementieren eine Bridging-Funktion gemäß IEEE 802.1Q, bei der Ethernet-Telegramme, die nicht von einem Gerät 22 stammen oder an dieses gerichtet sind, über die Kommunikationsports dieses Geräts 22 weitergeleitet werden. Auf diese Weise kann die Kommunikation zwischen den Geräten 22 über die anderen Geräte 22 derselben Kette 24 geleitet werden.

Ohne zusätzliche Maßnahmen könnten durch den Aufbau des Kommunikationsnetzes 20 kreisende Telegramme entstehen, die zu einer "Überflutung" des Kommunikationsnetzes 20 führen würden und so dessen Bandbreite komplett verbrauchen würden. Um dies zu vermeiden, führen die Knoten (Switche 21 und Geräte 22) des Kommunikationsnetzes 20 die RSTP-Funktionalität nach IEEE 802.1Q aus, wodurch die Ringstrukturen des Kommunikationsnetzes 20 gezielt unterbrochen werden. Dies geschieht durch aktives Blockieren von ausgewählten Kommunikationsports, denen ein "Discarding"-Status zugewiesen wird. Wenn der Datenverkehr in dem Kommunikationsnetz 20 wegen Unterbrechung einer Verbindung und/oder Ausfall eines Knotens unterbrochen wird, wird dieser Fehler durch die Knoten des Kommunikationsnetzes 20 erkannt. Durch Anwenden der RSTP-Vorschriften rekonfiguriert sich das Kommunikationsnetz 20, indem einer oder mehrere der blockierten ("discarding") Kommunikationsports entsperrt werden und die Nachrichten weiterleiten, wodurch ein ununterbrochener Datenverkehr wiederhergestellt wird. RSTP Kommunikationsnetze können neben der hier erläuterten hierarchischen Ringstruktur auch andere Strukturen, z.B. vermaschte Strukturen, aufweisen.

RSTP-Kommunikationsnetze sind im Bereich der industriellen Kommunikation und in Unterstationen von Energieversorgungsnetzen weit verbreitet. Hierbei wird eine Redundanz in dem Kommunikationsnetz 20 durch die spezielle Struktur und dadurch erreicht, dass durch gezieltes Aktivieren bzw. Blockieren von Kommunikationsports redundante Pfade geschaffen werden, die als Reaktion auf etwaige Störungen im Kommunikationsnetz flexibel rekonfiguriert werden können. Damit ist gewährleistet, dass jederzeit zwischen allen angeschlossenen Geräten 22 Datenverkehr möglich ist.

Die Verwendung eines Kommunikationsnetzes, das gemäß dem RSTP-Verfahren arbeitet, ist beispielsweise aus der Internationalen Patentanmeldung WO 2015/024588 A1 bekannt.

Weiterer Stand der Technik ist in der DE 10 2006 038592 A1, US 2016/219051 A1 oder US 2006/036856 A1 offenbart.

Die oben beschriebene Vorgehensweise zur Authentifizierung eines Gerätes ist jedoch nicht für redundante Kommunikationsnetze ausgelegt. Geräte in redundant arbeitenden RSTP-Kommunikationsnetzen sind nämlich im Gegensatz zu über einen einzigen Kommunikationsport mit einem Zugangspunkt eines Kommunikationsnetzes verbundenen Geräten vielmehr über zwei Kommunikationsports entweder mit zwei benachbarten Geräten oder mit einem benachbarten Gerät und einer benachbarten Ethernet-Bridge verbunden.

Der Fachmann stellt sich daher die Aufgabe, eine Authentifizierung eines Knotens auch in einem redundant ausgelegten Kommunikationsnetz, insbesondere einem nach IEEE 802.1Q RSTP ausgelegten Kommunikationsnetz, durchführen zu können.

Zur Lösung dieser Aufgabe wird ein Verfahren der eingangs beschriebenen Art erfindungsgemäß dahingehend weitergebildet, dass das Kommunikationsnetz mehrere Knoten in Form von Ethernet Bridges und elektronischen Geräten umfasst, die jeweils zumindest zwei Kommunikationsports aufweisen, und ein Spannbaumprotokoll ausführt, bei dem zumindest einer der Knoten angewiesen wird, in Abhängigkeit von einem Betriebszustand des Kommunikationsnetzes zumindest einen seiner Kommunikationsports für den betriebsmäßigen Datenverkehr zu blockieren oder zu aktivieren. Mindestens zwei der Knoten tauschen über ihre einander zugewandten Kommunikationsports ihre jeweilige Authentifizierungsinformation enthaltende Authentifizierungsanfragen aus und senden die jeweilige empfangene Authentifizierungsinformation an einen mit dem Kommunikationsnetz verbundenen Authentifizierungsserver, der anhand der jeweiligen empfangenen Authentifizierungsinformation jeweils eine Prüfung der Authentizität des jeweiligen Knotens durchführt und als Ergebnis der Prüfung den jeweiligen Knoten als Teilnehmer in dem Kommunikationsnetz zulässt oder ablehnt. Als Authentifizierungsinformation kann beispielsweise eine Kombination aus Username und Passwort, eine Identifizierung des Gerätes, z.B. ein Secure Device Identifier (DevID), und/oder ein Gerätezertifikat verwendet werden.

Erfindungsgemäß findet somit jeweils eine gegenseitige portbasierte Authentifizierung mindestens zweier Knoten des Kommunikationsnetzes statt. Die Knoten nehmen dabei im Sinne des IEEE 802.1X Standards gleichzeitig die Rolle des Supplicants und die Rolle des Authenticators ein, je nachdem, welche Nachrichten sie aktuell senden bzw. empfangen. Damit hat das erfindungsgemäße Verfahren den Vorteil, dass keine proprietären Änderungen bezüglich des RSTP-Verfahrens eingeführt werden müssen, um die Funktionalität der Authentifizierung ergänzen zu können, so dass diesbezüglich eine Interoperabilität mit anderen Teilnehmern des Kommunikationsnetzes nicht beeinträchtigt wird.

Dabei kann die Authentifizierungsanfrage aus einer oder mehrere Nachrichten bestehen. Entsprechend können als Reaktion auf die Authentifizierungsanfrage vom Authentifizierungsserver gesendete Authentifizierungsantworten aus einer oder mehreren Nachrichten bestehen. Es kann somit ein Austausch mehrerer Nachrichten zwischen dem als Authenticator fungierenden Gerät und dem Authentifizierungsserver stattfinden.

Das erfindungsgemäße Verfahren kann nacheinander oder gleichzeitig bei mehreren, wenn nicht sogar allen Knoten des Kommunikationsnetzes ausgeführt werden. Dabei kann es notwendig sein, dass zur Authentifizierung dienende Nachrichten (z.B. EAP/AAA Nachrichten), die von einem Knoten in Richtung des Authentifizierungsservers ausgesendet werden, von anderen Knoten weitergeleitet werden, unabhängig davon, ob diese bereits authentifiziert sind oder nicht.

Eine Authentifizierung eines Knotens kann hierbei beispielsweise wegen eines Ausfalls einer Verbindung zwischen zwei Knoten oder beim Einschalten eines Knotens notwendig werden.

So kann gemäß einer ersten vorteilhaften Ausführungsform des erfindungsgemäßen Verfahrens vorgesehen sein, dass zum Wiederherstellen einer unterbrochenen Kommunikationsverbindung zwischen zwei Knoten diejenigen beiden Knoten, die an der Unterbrechungsstelle angeordnet sind, über ihre einander zugewandten Kommunikationsports ihre jeweilige Authentifizierungsinformation enthaltende Authentifizierungsanfragen austauschen und die jeweilige empfangene Authentifizierungsinformation an den Authentifizierungsserver senden.

Diese Ausführungsform betrifft somit den Fall einer unterbrochenen Kommunikationsverbindung zwischen zwei Knoten. Der Authentifizierungsserver empfängt bei dieser Variante des erfindungsgemäßen Verfahrens somit zwei Authentifizierungsanfragen von den beiden an der Unterbrechungsstelle liegenden Knoten:
Der erste Knoten sendet in der Rolle des Supplicants eine EAPOL-Nachricht an den zweiten Knoten, der diesbezüglich die Rolle des Authenticators einnimmt. Dieses sendet daraufhin eine EAP/AAA Nachricht zum Authentifizierungsserver. Zudem sendet der zweite Knoten in der Rolle des Supplicants eine EAPOL-Nachricht an den ersten Knoten, der diesbezüglich die Rolle des Authenticators einnimmt. Dieser sendet daraufhin eine EAP/AAA Nachricht zum Authentifizierungsserver.

Diese Authentifizierungs-Kommunikation läuft zeitlich parallel, quasi gleichzeitig und unabhängig voneinander ab. Gemäß einer zweiten vorteilhaften Ausführungsform des erfindungsgemäßen Verfahrens kann vorgesehen sein, dass beim Einschalten eines Knotens der eingeschaltete Knoten und seine beiden benachbarten Knoten über ihre einander zugewandten Kommunikationsports ihre jeweilige Authentifizierungsinformation enthaltende Authentifizierungsanfragen austauschen und die jeweilige empfangene Authentifizierungsinformation an den Authentifizierungsserver senden.

Diese Ausführungsform betrifft somit den Fall des erstmaligen oder erneuten Einschaltens eines Knotens, beispielsweise bei einer Erweiterung des Kommunikationsnetzes oder einem Austausch eines Knotens. Der Authentifizierungsserver empfängt bei dieser Variante des erfindungsgemäßen Verfahrens insgesamt vier Authentifizierungsanfragen von den Knoten, jeweils zwei für den eingeschalteten Knoten und jedes seiner Nachbargeräte.

Konkret kann zudem vorgesehen sein, dass das Kommunikationsnetz ein Spannbaumprotokoll gemäß dem Standard IEEE 802.1Q RSTP implementiert. Damit ist bei dem erfindungsgemäßen Verfahren insbesondere eine volle Kompatibilität zu den Standards IEEE 802.1X und IEEE 802.1Q RSTP gegeben.

Gemäß einer weiteren vorteilhaften Ausführungsform des erfindungsgemäßen Verfahrens kann vorgesehen sein, dass die Knoten des Kommunikationsnetzes ausschließlich solche Nachrichten, die zur Authentifizierung eines Knotens oder zur Rekonfigurierung des Kommunikationsnetzes gemäß dem Spannbaumprotokoll dienen, auch dann weiterleiten, wenn sie selbst nicht vollständig authentifiziert sind.

Hierdurch kann erreicht werden, dass zwar solche Nachrichten administrativer Art, die für die Authentifizierung der Knoten und die Rekonfigurierung des Kommunikationsnetzes gemäß RSTP zuständig sind, jederzeit weitergeleitet werden, Nachrichten, die dem Betrieb der Automatisierungsanlage dienen jedoch so lange blockiert werden, bis eine vollständige Authentifizierung der jeweilige Knoten stattgefunden hat.

Gemäß einer weiteren vorteilhaften Ausführungsform des erfindungsgemäßen Verfahrens kann vorgesehen sein, dass zur Prüfung der Authentizität der Knoten die empfangene Authentifizierungsinformation mit einer Referenz-Authentifizierungsinformation verglichen wird und/oder ein in der Authentifizierungsinformation enthaltenes Zertifikat hinsichtlich seiner Vertrauenswürdigkeit geprüft wird, und bei Übereinstimmung der jeweilige Knoten in dem Kommunikationsnetz zugelassen wird.

Die Referenz-Authentifizierungsinformation kann hierbei beispielsweise bei einer Systemkonfiguration in einer Datenbank des Authentifizierungsservers hinterlegt worden sein. Hinsichtlich des Zertifikats kann beispielsweise geprüft werden, ob der Authentifizierungsserver diejenige Stelle, die das Zertifikat ausgestellt hat, als vertrauenswürdig ansieht.

Eine weitere vorteilhafte Ausführungsform des erfindungsgemäßen Verfahrens sieht vor, dass als Reaktion auf die Prüfung eine jeweilige Authentifizierungsantwort an den jeweiligen Knoten gesendet wird, die angibt, ob der jeweilige Knoten einen jeweiligen anderen Knoten zur Kommunikation in dem Kommunikationsnetz zulassen darf oder nicht. Wie oben erwähnt kann die Authentifizierungsantwort aus einer oder mehreren Nachrichten bestehen.

Gemäß einer weiteren vorteilhaften Ausführungsform des erfindungsgemäßen Verfahrens kann vorgesehen sein, dass zeitlich parallel zur Authentifizierung der Knoten mittels des Spannbaumprotokolls eine Rekonfigurierung des Kommunikationsnetzes durchgeführt wird.

Diese Rekonfiguration berücksichtigt den jeweils neuen Status des Kommunikationsnetzes, insbesondere eine wiederhergestellte Kommunikationsverbindung nach einer Unterbrechung und/oder einen (erstmalig oder erneut) eingeschalteten Knoten. Auf diese Weise kann das Kommunikationsnetz zeitnah auf eine Änderung reagieren.

Eine weitere vorteilhafte Ausführungsform des erfindungsgemäßen Verfahrens sieht zudem vor, dass die Authentifizierungsanfragen auch über solche Kommunikationsports übertragen werden, die entsprechend der Anwendung des Spannbaumprotokolls blockiert sind.

Hierdurch wird sichergestellt, dass auch bei einem Aufeinandertreffen einer unterbrochenen Kommunikationsverbindung bzw. einem eingeschalteten Knoten mit einem für die betriebsmäßige Kommunikation nach RSTP blockierten Kommunikationsport eine Authentifizierung der Kommunikationsverbindung erfolgen kann.

Gemäß einer weiteren vorteilhaften Ausführungsform des erfindungsgemäßen Verfahrens kann zudem vorgesehen sein, dass die Knoten je eine mit einem ersten Kommunikationsport über eine erste Portzugriffssteuereinheit verbundene erste Authentifizierungseinrichtung und je eine mit einem zweiten Kommunikationsport über eine zweite Portzugriffssteuereinheit verbundene zweite Authentifizierungseinrichtung aufweisen, wobei die jeweilige Authentifizierungseinrichtung die jeweilige Authentifizierungsanfrage erzeugt und über den mit ihr verbundenen Kommunikationsport aussendet.

Auf diese Weise kann mit einfachen Mitteln für jeden der beiden Kommunikationsports eines Knotens eine separate Authentifizierung angestoßen werden. Bei Knoten in Form von Ethernet Bridges kann die Anzahl der Portzugriffssteuerungen und Authentifizierungseinrichtungen entsprechend der Anzahl der vorhandenen Kommunikationsports variieren.

Die oben genannte Aufgabe wird auch durch einen Knoten zum Anschluss an ein Kommunikationsnetz einer Automatisierungsanlage gelöst, wobei das Kommunikationsnetz mehrere Knoten in Form von Ethernet-Bridges und elektronischen Geräten mit jeweils zumindest zwei Kommunikationsports umfasst und zur Ausführung eines Spannbaumprotokolls ausgebildet ist, bei dem zumindest einer der Knoten angewiesen wird, in Abhängigkeit von einem Betriebszustand des Kommunikationsnetzes zumindest einen seiner Kommunikationsports für den betriebsmäßigen Datenverkehr zu blockieren oder zu aktivieren.

Erfindungsgemäß ist vorgesehen, dass der Knoten zur Durchführung eines Verfahrens gemäß einem der vorigen Ansprüche 1 - 9 ausgebildet ist.

Hinsichtlich des erfindungsgemäßen Knotens gelten alle zu dem erfindungsgemäßen Verfahren voranstehend und nachfolgend gemachten Ausführungen und umgekehrt in entsprechender Weise, insbesondere ist der erfindungsgemäße Knoten zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Knotens wird auf die zu dem erfindungsgemäßen Verfahren beschriebenen Vorteile verwiesen.

Eine vorteilhafte Ausführungsform des erfindungsgemäßen Knotens sieht vor, dass der Knoten eine mit einem ersten Kommunikationsport über eine erste Portzugriffssteuereinheit verbundene erste Authentifizierungseinrichtung und eine mit einem zweiten Kommunikationsport über eine zweite Portzugriffssteuereinheit verbundene zweite Authentifizierungseinrichtung aufweist, wobei die jeweilige Authentifizierungseinrichtung dazu ausgebildet ist, die jeweilige Authentifizierungsanfrage zu erzeugen und über den mit ihr verbundenen Kommunikationsport auszusenden.

Schließlich wird die oben genannte Aufgabe auch gelöst durch ein Kommunikationsnetz einer Automatisierungsanlage, wobei das Kommunikationsnetz mehrere Knoten in Form von Ethernet-Bridges und elektronischen Geräten mit jeweils zumindest zwei Kommunikationsports umfasst und zur Ausführung eines Spannbaumprotokolls ausgebildet ist, bei dem zumindest einer der Knoten angewiesen wird, in Abhängigkeit von einem Betriebszustand des Kommunikationsnetzes zumindest einen seiner Kommunikationsports für den betriebsmäßigen Datenverkehr zu blockieren oder zu aktivieren, und wobei das Kommunikationsnetz einen Authentifizierungsserver aufweist.

Erfindungsgemäß ist vorgesehen, dass das Kommunikationsnetz dazu ausgebildet ist, zur Authentifizierung eines Knotens ein Verfahren gemäß einem der Ansprüche 1 bis 10 durchzuführen. Hierzu wirken die Komponenten des Kommunikationsnetzes in entsprechender Weise zusammen.

In diesem Zusammenhang kann zudem vorgesehen sein, dass der Knoten entsprechend einem der Ansprüche 11 oder 12 ausgebildet ist.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und des erfindungsgemäßen Gerätes bzw. des erfindungsgemäßen Kommunikationsnetzes in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine Darstellung eines zu authentifizierenden Gerätes in einem Kommunikationsnetz gemäß dem Stand der Technik;
- Figur 2: ein Beispiel eines gemäß IEEE 802.1Q RSTP redundant aufgebauten Kommunikationsnetzes gemäß dem Stand der Technik;
- Figur 3: eine beispielhafte Darstellung eines RSTP-Kommunikationsnetzes mit daran angeschlossenen Knoten;
- Figur 4: eine beispielhafte Darstellung des Kommunikationsnetzes der Figur 3 nach einer Unterbrechung;
- Figur 5: eine schematische Darstellung des Aufbaus eines zu authentifizierenden Knotens; und
- Figur 6: eine beispielhafte Darstellung eines Kommunikationsnetzes beim Einschalten eines Knotens.

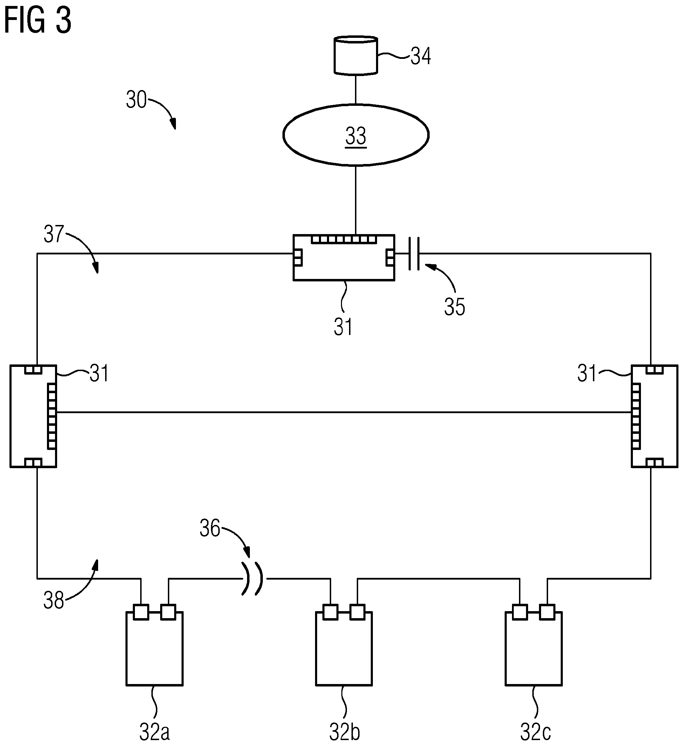

In Figur 3 ist ein beispielhaftes Kommunikationsnetz 30 dargestellt, das Ethernet-Bridges 31 und kommunikationsfähige elektronische Geräte 32a-c umfasst. Die Geräte 32a-c und das Kommunikationsnetz 30 können zum Beispiel zu einer Automatisierungsanlage eines technischen Systems (z.B. eines Energieversorgungsnetzes, einer Fertigungsanlage oder einer Prozessanlage) gehören. In diesem Fall können die Geräte 32a-c beispielsweise Automatisierungsgeräte zum Regeln, Steuern, Überwachen und/ oder Schützen des technischen Systems sein. Die Ethernet-Bridges 31 können beispielsweise als Ethernet-Switche ausgebildet sein.

Die Geräte 32a-c weisen jeweils zwei Kommunikationsports auf, mit denen sie entweder untereinander und/oder mit den Ethernet-Bridges 31 verbunden sind.

Dadurch ist das Kommunikationsnetz 30 derart aufgebaut, dass mehrere Kommunikationsringe entstehen; beispielhaft sind in dem Kommunikationsnetz 30 der Figur 3 zwei Kommunikationsringe 37 und 38 gezeigt, wobei der erste Kommunikationsring 37 aus den Ethernet-Bridges 31 und der zweite Kommunikationsring 38 aus den Geräten 32a-c und zweien der Ethernet-Bridges 31 gebildet wird. Mit einer der Ethernet-Bridges 31 ist darüber hinaus ein Authentifizierungsserver 34 über ein separates LAN (local area network) oder WAN (wide area communication network) 33 verbunden.

Für einen ersten Fall sei angenommen, dass an einer Unterbrechungsstelle 36 eine Verbindung zwischen den Geräten 32a und 32b unterbrochen ist. Die (mehrfache) Ringstruktur des Kommunikationsnetzes 30 ermöglicht es auch nach der Unterbrechung, durch gezieltes Blockieren ("discarding") eines Kommunikationsports einer der Ethernet-Bridges an der Stelle 35 eindeutige Kommunikationspfade zwischen jedem der Geräte 32a-c bzw. Ethernet-Bridges 31 herzustellen. Eindeutige Kommunikationspfade bedeuten in diesem Zusammenhang insbesondere die Verhinderung von Schleifen oder Maschen, in denen kreisende Telegramme (Nachrichten) auftreten könnten. Hierfür wird das Spannbaumprotokoll (z.B. RSTP) ausgeführt. Somit ist trotz der Unterbrechungsstelle 36 die Kommunikation mit jedem der Geräte 32a-c gewährleistet.

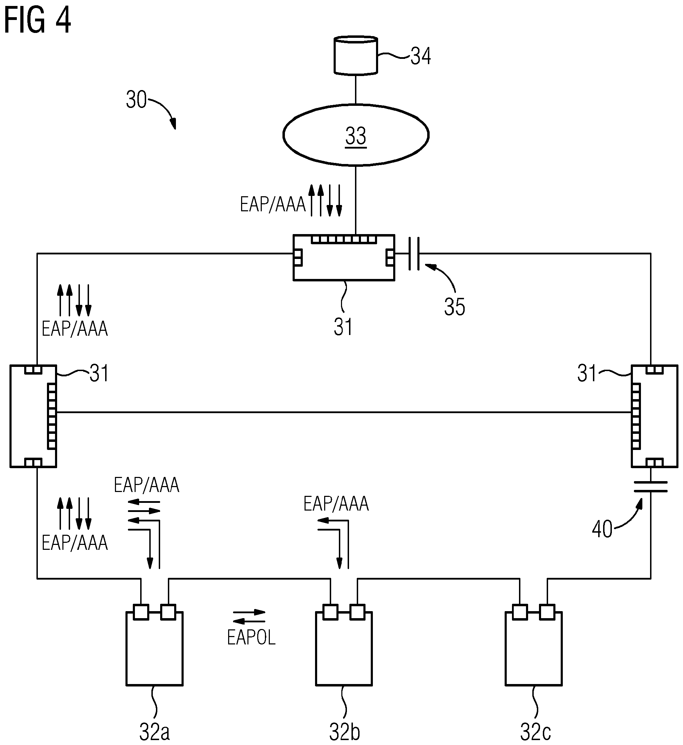

Figur 4 zeigt die Situation, nachdem die Verbindung an der Unterbrechungsstelle physikalisch wiederhergestellt worden ist. Eine betriebsmäßige Datenkommunikation über die wiederhergestellte Verbindung wird jedoch noch verhindert, bis sich die beiden unmittelbar an die ehemalige Unterbrechungsstelle 36 angrenzenden Geräte 32a und 32b gegenseitig authentifiziert haben. Prinzipiell können mehrere oder sogar alle Geräte 32a-c des Kommunikationsnetzes 30 eine Authentifizierung durchführen. Dies kann nacheinander oder gleichzeitig geschehen. Die zu diesem Zweck auszutauschenden Nachrichten, z.B. EAP/AAA Nachrichten, müssen dabei andere Knoten passieren können, unabhängig davon, ob diese bereits erfolgreich authentifiziert wurden oder nicht. Nachfolgend sei der Einfachheit halber angenommen, dass lediglich die Geräte 32a und 32b authentifiziert werden sollen.

Dafür nehmen die beiden Geräte 32a, 32b bezüglich ihrer einander zugewandten Kommunikationsports jeweils wechselseitig die Rollen "Supplicant" und "Authenticator" gemäß der IEEE 802.1X ein und tauschen über die wiederhergestellte Verbindung Authentifizierungsanfragen, z.B. in Form von EAPOL Nachrichten aus, die eine jeweilige Authentifizierungsinformation des sendenden Geräts enthält. Solche EAPOL Nachrichten werden lediglich lokal an den beteiligten Kommunikationsports zwischen den beiden Geräten 32a, 32b übertragen und werden nicht über den jeweils anderen Kommunikationsport weitergeleitet.

Konkret sendet das Gerät 32a in der Supplicant Rolle eine Authentifizierungsanfrage (EAPOL Nachricht) an das Gerät 32b, das diesbezüglich die Authenticator Rolle einnimmt. Umgekehrt sendet das Gerät 32b in der Supplicant Rolle eine Authentifizierungsanfrage (EAPOL Nachricht) an das Gerät 32a, das diesbezüglich die Authenticator Rolle einnimmt.

In der Authenticator Rolle senden die Geräte nach Erhalt der Authentifizierungsanfrage die darin enthaltene Authentifizierungsinformation jeweils an den Authentifizierungsserver 34. Die Kommunikation mit dem Authentifizierungsserver 34 findet z.B. in Form von EAP/AAA Nachrichten statt.

Diese Nachrichten werden innerhalb des Kommunikationsnetzes 30 entlang eines gemäß dem Spannbaum-Protokoll bestimmten Pfades gesendet. Nach der Wiederherstellung der Verbindung an der ehemaligen Unterbrechungsstelle werden solche Pfade durch die Knoten (Geräte und Ethernet-Bridges) des Kommunikationsnetzes neu berechnet und führen zu einer Rekonfiguration des Kommunikationsnetzes. Dabei werden einzelne Kommunikationsports blockiert bzw. aktiviert, um eindeutige Spannbaum-Pfade innerhalb des Kommunikationsnetzes zu bilden. Konkret wird bei dem Beispiel der Figur 4 ein Kommunikationsport einer Ethernet-Bridge an der Stelle 40 blockiert ("discarding"). Der bereits zuvor blockierte Kommunikationsport an der Stelle 35 bleibt blockiert. Somit ergeben sich auch nach der Wiederherstellung der Verbindung nur eindeutige Pfade ohne Ringschlüsse, in denen kreisende Telegramme auftreten könnten.

Die Neuberechnung und Rekonfiguration der Spannbaum-Struktur des Kommunikationsnetzes erfolgt parallel zur Authentifizierung der Geräte 32a, 32b. Die Rekonfiguration kann einige Zeit in Anspruch nehmen, bis die zur Authentifizierung dienenden Nachrichten (EAP/AAA) korrekt weitergeleitet werden. Der neu entstandene Pfad ist in Figur 4 durch beispielhaft beschriftete Pfeile angedeutet.

Dies zeigt, dass solche zur Authentifizierung dienenden Nachrichten innerhalb des Kommunikationsnetzes 30 auch zu Knoten gelangen können, die noch nicht authentifiziert sind und die deshalb keine betriebsmäßigen Datentelegramme mit anderen Knoten austauschen dürfen. Damit sowohl die Rekonfiguration als auch die Authentifizierung korrekt durchgeführt werden können, muss daher sichergestellt sein, dass auch über noch nicht authentifizierte Kommunikationsports Nachrichten, die im Zusammenhang mit der Authentifizierung (EAP/AAA) oder einer Rekonfiguration des Kommunikationsnetzes gemäß dem Spannbaumprotokoll (Bridge Protocol Data Units - BPDUs) versendet werden, weitergeleitet werden. Damit solche nicht authentifizierten Knoten Nachrichten im Zusammenhang mit der Authentifizierung weiterleiten können, kann eine spezielle Filterfunktion oder ein für solche Nachrichten reserviertes VLAN vorgesehen sein, wodurch ein Senden und Empfangen für bestimmte Nachrichten über an sich nicht authentifizierte Kommunikationsports ermöglicht wird.

Der Authentifizierungsserver 34 empfängt die (z.B. in den EAP/AAA Nachrichten enthaltene) jeweilige Authentifizierungsinformation und prüft auf dieser Basis, ob die Geräte 32a, 32b als Teilnehmer im Kommunikationsnetz 30 zugelassen werden dürfen. Zu diesem Zweck hat der Authentifizierungsserver 34 Zugriff auf eine jeweilige für die Geräte 32a, 32b spezifische Referenz-Authentifizierungsinformation, mit der er die empfangenen Authentifizierungsinformationen vergleicht. Alternativ oder zusätzlich kann auch die Vertrauenswürdigkeit eines in der jeweiligen Authentifizierungsinformation enthaltenen Zertifikats geprüft werden.

Entsprechend der Entscheidung sendet der Authentifizierungsserver 34 Authentifizierungsantworten, die aus einer oder mehreren Nachrichten bestehen können, an die Geräte 32a, 32b, die bei erfolgreicher Authentifizierung ihre miteinander verbundenen Kommunikationsports für den uneingeschränkten Datenaustausch öffnen.

Auf diese Weise führen die Geräte 32a und 32b miteinander die gegenseitige Authentifizierung durch. Nach erfolgreicher Authentifizierung können die jeweiligen Geräte 32a, 32b über ihre miteinander verbundenen Kommunikationsports miteinander Datentelegramme austauschen.

In der Praxis kann es (gleichzeitig oder nacheinander) passieren, dass mehrere Verbindungen wiederhergestellt werden oder einzelne oder mehrere Knoten (Geräte oder Ethernet Bridges) ihren Betrieb aufnehmen. In einem solchen Fall wird die oben beschriebene Vorgehensweise zur Authentifizierung für jeden betroffenen Knoten und seine betroffenen benachbarten Knoten durchgeführt. Dies kann auch gleichzeitig erfolgen. Ein betriebsmäßiger Datenaustausch im Kommunikationsnetz 30 kann erst dann aufgenommen werden, wenn alle betroffenen Knoten authentifiziert worden sind und die Spannbaum-Rekonfiguration abgeschlossen wurde.

Außerdem kann es auch vorkommen, dass Authentifizierungsanfragen (EAPOL Nachrichten) über gemäß dem Spannbaum-Protokoll eigentlich blockierte Kommunikationsports ausgetauscht werden müssen. Dies muss ebenfalls zugelassen werden und wird in entsprechender Weise wie die Übertragung von Rekonfigurations-Nachrichten (BPDUs) behandelt.

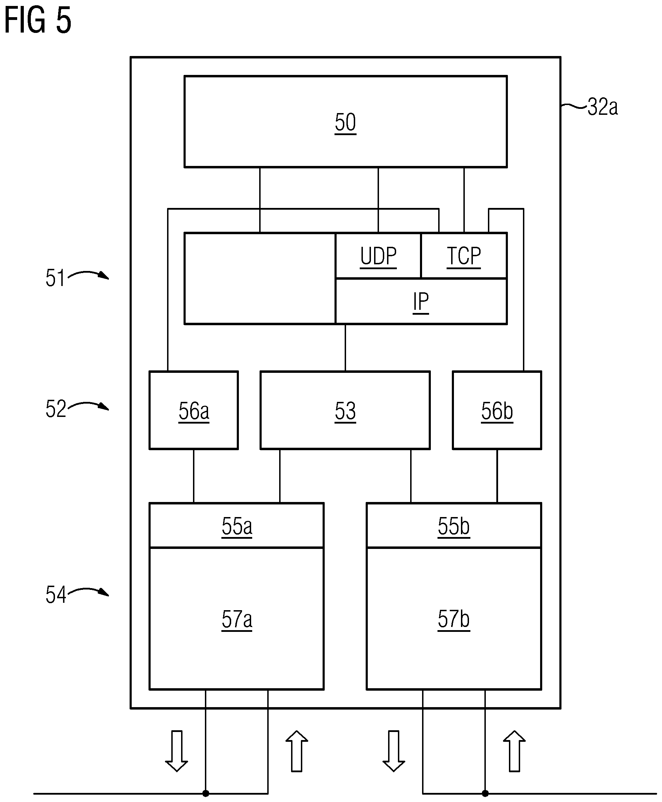

Figur 5 zeigt schließlich den schematischen Aufbau der Kommunikationsstruktur eines Knotens. Beispielhaft wird das Gerät 32a herausgegriffen (die Geräte 32a-c sind diesbezüglich einander entsprechend aufgebaut). Das Gerät 32a weist eine Applikationsebene 50 auf, auf der die eigentlichen Gerätefunktionen mittels einer beispielsweise auf einem Prozessor ablaufenden Gerätesoftware oder einem integrierten Logikbaustein mit Hardwarecodierung (ASIC, FPGA) oder einer Kombination daraus ausgeführt werden. Zur externen Kommunikation greift die Applikationsebene 50 auf eine Transport-/Netzwerkebene 51 (Transport Layer, Network Layer) zu, die Protokollstacks für die Echtzeitkommunikation ("hard realtime stack") sowie die Protokolle UDP, TCP und IP aufweist.

Diese Transport-/Netzwerkebene 51 steht mit einer MAC (Media Access Control) Relaiseinheit ("MAC Relay Entity") 53 einer Verbindungsebene 52 (Link Layer) in Verbindung, die für eine Bridging-Funktion zwischen den Kommunikationsports des Geräts 32a verantwortlich ist und wiederum auf einer physikalischen Ebene 54 (Physical Layer) mit dem ersten Kommunikationsport 57a und dem zweiten Kommunikationsport 57b des Gerätes 32aa verbunden ist. Die Kommunikationsports 57a bzw. 57b stehen zum Datenaustausch mit dem in Figur 5 nur angedeuteten Kommunikationsnetz 30 in Verbindung.

Funktional zwischen den Kommunikationsports 57a, 57b und der MAC Relaiseinheit 53 sind eine erste bzw. eine zweite Portzugriffssteuereinheit 55a bzw. 55b angeordnet. Die jeweilige Portzugriffssteuereinheit 55a bzw. 55b ist daneben jeweils mit einer Authentifizierungseinrichtung 56a bzw. 56b verbunden. Die Authentifizierungseinrichtungen 56a, 56b sind darüber hinaus mit der TCP-Protokolleinheit der Transport-/Netzwerkebene 51 verbunden.

Die geräteseitige Authentifizierung wird wie nachfolgend beschrieben durchgeführt. Die beiden Instanzen der Portzugriffssteuereinheit 55a bzw. 55b dienen als protokollfreie Zwischenschicht ("protocol-less shim") und können im Sinne der IEEE 802.1X-2020 wahlweise z.B. als "Port Access Controller" PAC oder als "MAC Security Entity" (SecY) mit zusätzlicher Datenverschlüsselung implementiert werden.

Jede Portzugriffssteuereinheit 55a, 55b ist mit einem Kommunikationsport 57a, 57b, der MAC Relaiseinheit 53 und jeweils einer Instanz der Authentifizierungseinrichtungen 56a, 56b verbunden. Dabei stellen die Authentifizierungseinrichtungen 56a, 56b beispielsweise Authentifizierungsprotokoll-Maschinen gemäß der IEEE 802.1X-2020 dar und nehmen bei der gegenseitigen Authentifizierung entsprechend die Supplicant bzw. Authenticator Rolle ein.

Die Authentifizierungseinrichtungen 56a, 56b erzeugen zum Anstoßen der Authentifizierung des Geräts 32a die Authentifizierungsanfragen und übermitteln sie über die jeweilige Portzugriffssteuerung 55a, 55b zur Übertragung an den jeweiligen Kommunikationsport 57a, 57b. Damit werden Nachrichten (z.B. EAPOL Nachrichten) im Zusammenhang mit der Authentifizierung immer zwischen der jeweiligen Authentifizierungseinrichtung 56a, 56b und dem jeweiligen Kommunikationsport 57a, 57b ausgetauscht.

In der Authenticator Rolle senden und empfangen die Authentifizierungseinrichtungen 56a, 56b die der Authentifizierung dienenden Nachrichten (z.B. EAP/AAA Nachrichten) gemäß der Authenticator-Rolle des Standards IEEE 802.1X. Da hierfür wie oben erwähnt eine Übertragung auch zumindest teilweise über eine (noch) nicht authentifizierte Verbindung stattfinden kann, ist die jeweilige Authentifizierungseinrichtung 56a, 56b intern mit dem TCI/IP Protokoll-Stack verbunden, so dass solche Nachrichten über die MAC Relaiseinheit 53 weitergeleitet werden können. Die Portzugriffssteuerungen 55a, 55b implementieren dabei die Filterfunktion, die solchen Nachrichten erlauben, während des Authentifizierungsvorgangs zwischen den Kommunikationsports 57a, 57b und der MAC Relaiseinheit 53 übermittelt zu werden.

Nach der erfolgreichen Authentifizierung der Geräte 32a-c sorgen die Portzugriffsteuereinheiten 55a, 55b dafür, dass der Datenaustausch regulär zwischen der MAC Relaiseinheit 53 und den Kommunikationsports 57a, 57b erfolgt. Damit dienen die Portzugriffssteuereinheiten 55a, 55b als statusabhängige Umschalter der Kommunikation zwischen dem jeweiligen Kommunikationsport einerseits und der Authentifizierungseinrichtung 56a, 56b bzw. der MAC Relaiseinheit 53 andererseits.

Im Ergebnis wird die Authentifizierung unabhängig einerseits von der ersten Authentifizierungseinrichtung 56a hinsichtlich des einen Kommunikationsports 57a und andererseits von der zweiten Authentifizierungseinrichtung 56b hinsichtlich des anderen Kommunikationsports 57b durchgeführt.

Die mit den Geräten 32a-c verbundenen Ethernet-Bridges 31 führen prinzipiell eine entsprechende Vorgehensweise zur portbasierten Authentifikation durch und übernehmen an den betroffenen Kommunikationsports ebenfalls eine kombinierte Supplicant- bzw. Authenticator Rolle entsprechend IEEE 802.1Q. Dabei können die Ethernet-Bridges 31 strukturell entsprechend zur obigen Erläuterung des Aufbaus der Geräte 32a-c ausgebildet sein, wobei der Aufbau natürlich an die Anzahl der jeweiligen Switch-Kommunikationsports angepasst ist.

Neben dem in Figur 5 beschriebenen funktionellen Aufbau der Geräte 32a-c bzw. betroffener Ethernet-Bridges 31 werden keine Änderungen oder Erweiterungen hinsichtlich der einzelnen Komponenten des Kommunikationsnetzes nötig, so dass die beschriebene Lösung voll kompatibel mit den Standards IEEE 802.1X and IEEE 802.1Q RSTP ist.

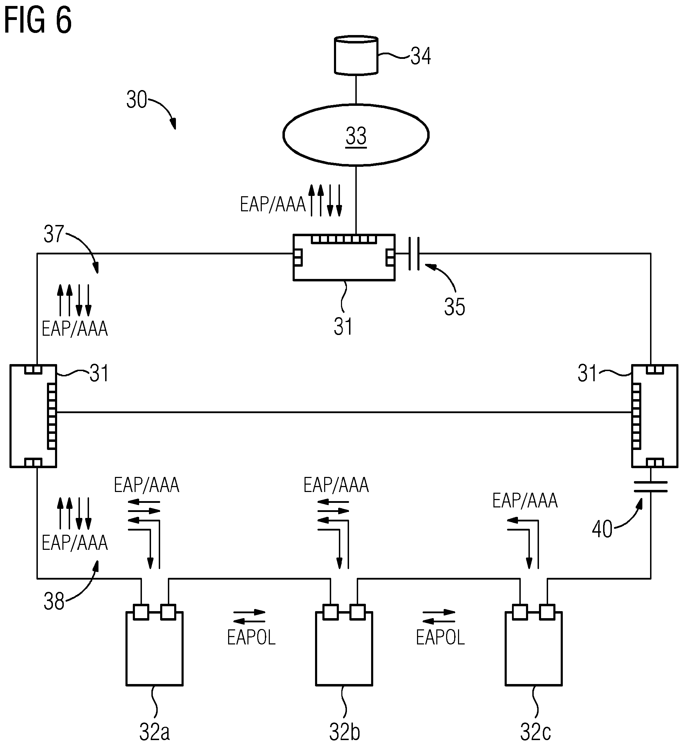

Figur 6 zeigt schließlich die Situation der Authentifizierung eines erstmalig oder erneut eingeschalteten Knotens. Beispielhaft sei angenommen, dass das Gerät 32b als Ersatzgerät für ein altes Gerät in das Kommunikationsnetz eingebracht worden ist. Nachdem die physikalische Verbindung der Kommunikationsports des Geräts 32b mit den Kommunikationsports der unmittelbar benachbarten Geräte 32a, 32c hergestellt worden ist, wird das Gerät 32b eingeschaltet. In einem Bootvorgang des Geräts 32b werden auch dessen Kommunikationsfunktionalitäten aktiviert.

Um mit den anderen Knoten des Kommunikationsnetzes betriebsmäßig Daten austauschen zu können, muss das Gerät 32b authentifiziert werden. Diese Authentifizierung erfolgt portbasiert als gegenseitige Authentifizierung zwischen einerseits dem Gerät 32b und seinem ersten benachbarten Gerät 32a und andererseits dem Gerät 32b und seinem zweiten benachbarten Gerät 32c. Die Vorgehensweise zur Authentifizierung läuft hierbei in entsprechender Weise ab wie bereits zu Figur 4 beschrieben, wobei allerdings die Vorgänge jeweils für das Gerätepaar 32a, 32b bzw. 32b, 32c übertragen werden müssen.

Der Authentifizierungsserver 34 erhält somit insgesamt vier Nachrichten mit jeweiligen Authentifizierungsinformationen, jeweils zwei von jedem der erwähnten Gerätepaare.

Nach erfolgreicher Prüfung sendet der Authentifizierungsserver 34 an jedes der beteiligten Geräte 32a-c entsprechende Authentifizierungsantworten, die Geräte 32a-c dazu veranlassen, ihre jeweiligen Kommunikationsports für den betriebsmäßigen Datenverkehr mit dem jeweiligen betroffenen Nachbargerät zu öffnen.

Die beschriebene Vorgehensweise ist nicht ausschließlich auf RSTP-Kommunikationsnetze mit Ringstrukturen begrenzt, vielmehr können beliebige Spannbaum Topologien, z.B. vermaschte Netze, zum Einsatz kommen. Außerdem kann anstelle von RSTP auch ein MSTP Spannbaum-Protokoll eingesetzt werden.

Zusammengefasst stellt die Erfindung eine Lösung zur Verfügung, wie eine Authentifizierung eines Knotens in einem redundant aufgebauten Kommunikationsnetz erfolgen kann. Insbesondere erfolgt die Authentifizierung portbasiert entsprechend dem Standard IEEE 802.1X in einem gemäß dem Standard IEEE 802.1Q RSTP ausgebildeten Kommunikationsnetz. Die beschriebene Lösung ist besonders vorteilhaft in industriellen Automatisierungsanlagen einsetzbar, beispielsweise bei der Automatisierung von Energieversorgungsnetzen. Hierdurch können Ausfallsicherheit auf der einen Seite und höchste Cyber Security Anforderungen auf der anderen Seite wirksam miteinander verbunden werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, unter der Einschränkung, dass der Schutzumfang der Erfindung durch die nachfolgenden Patentansprüche bestimmt ist.

## Patentansprüche

1. Verfahren zum Authentifizieren von Knoten (31, 32a-c) eines Kommunikationsnetzes (30) einer Automatisierungsanlage, bei dem
- eine jeweilige die Knoten (31, 32a-c) angebende Authentifizierungsinformation an einen Authentifizierungsserver (34) übertragen wird und der Authentifizierungsserver (34) basierend auf der Authentifizierungsinformation die Knoten (31, 32a-c) als Teilnehmer in dem Kommunikationsnetz (30) zulässt oder ablehnt;
**dadurch gekennzeichnet, dass**
- das Kommunikationsnetz (30) mehrere Knoten (31, 32a-c) in Form von elektronischen Geräten (32a-c) mit Ethernet-Bridges (31) umfasst, die jeweils zumindest zwei Kommunikationsports aufweisen;
- mindestens zwei der Knoten (31, 32a-c) über ihre einander zugewandten Kommunikationsports ihre jeweilige Authentifizierungsinformation enthaltende Authentifizierungsanfragen austauschen;
- die zumindest zwei Knoten (31, 32a-c) die jeweilige empfangene Authentifizierungsinformation an einen mit dem Kommunikationsnetz (30) verbundenen Authentifizierungsserver (34) senden;
- der Authentifizierungsserver (34) anhand der jeweiligen empfangenen Authentifizierungsinformation jeweils eine Prüfung der Authentizität des jeweiligen Knotens (31, 32a-c) durchführt und als Ergebnis der Prüfung den jeweiligen Knoten (31, 32a-c) als Teilnehmer in dem Kommunikationsnetz (30) zulässt oder ablehnt,
**dadurch gekennzeichnet, dass**
- das Kommunikationsnetz (30) ein Spannbaumprotokoll ausführt, bei dem zumindest einer der Knoten (31, 32a-c) angewiesen wird, in Abhängigkeit von einem Betriebszustand des Kommunikationsnetzes (30) zumindest einen seiner Kommunikationsports für den betriebsmäßigen Datenverkehr zu blockieren oder zu aktivieren;
- die Knoten (31, 32a-c) des Kommunikationsnetzes (30) ausschließlich solche Nachrichten, die zur Authentifizierung eines Knotens (31, 32a-c) oder zur Rekonfigurierung des Kommunikationsnetzes (30) gemäß dem Spannbaumprotokoll dienen, auch dann weiterleiten, wenn sie selbst nicht vollständig authentifiziert sind.

2. Verfahren nach Anspruch 1,
**dadurch gekennzeichnet, dass**
- zum Wiederherstellen einer unterbrochenen Kommunikationsverbindung zwischen zwei Knoten (31, 32a-c) diejenigen beiden Knoten (z.B. 32a, 32b), die an der Unterbrechungsstelle (36) angeordnet sind, über ihre einander zugewandten Kommunikationsports ihre jeweilige Authentifizierungsinformation enthaltende Authentifizierungsanfragen austauschen und die jeweilige empfangene Authentifizierungsinformation an den Authentifizierungsserver (34) senden.

3. Verfahren nach Anspruch 1,
**dadurch gekennzeichnet, dass**
- beim Einschalten eines Knotens (31, 32a-c) der eingeschaltete Knoten (z.B. 32b) und seine beiden benachbarten Knoten (z.B. 32a, 32c) über ihre einander zugewandten Kommunikationsports ihre jeweilige Authentifizierungsinformation enthaltende Authentifizierungsanfragen austauschen und die jeweilige empfangene Authentifizierungsinformation an den Authentifizierungsserver (34) senden.

4. Verfahren nach einem der vorangehenden Ansprüche,
**dadurch gekennzeichnet, dass**
- das Kommunikationsnetz (30) ein Spannbaumprotokoll gemäß dem Standard IEEE 802.1Q RSTP implementiert.

5. Verfahren nach einem der vorangehenden Ansprüche,
**dadurch gekennzeichnet, dass**
- zur Prüfung der Authentizität der Knoten (31, 32a-c) die empfangene Authentifizierungsinformation mit einer Referenz-Authentifizierungsinformation verglichen wird und/oder ein in der Authentifizierungsinformation enthaltenes Zertifikat hinsichtlich seiner Vertrauenswürdigkeit geprüft wird; und
- bei Übereinstimmung der jeweilige Knoten (31, 32a-c) in dem Kommunikationsnetz (30) zugelassen wird.

6. Verfahren nach einem der vorangehenden Ansprüche,
**dadurch gekennzeichnet, dass**
- als Reaktion auf die Prüfung eine jeweilige Authentifizierungsantwort an den jeweiligen Knoten (31, 32a-c) gesendet wird, die angibt, ob der jeweilige Knoten (31,32a-c) einen jeweiligen anderen Knoten (31, 32a-c) zur Kommunikation in dem Kommunikationsnetz (30) zulassen darf oder nicht.

7. Verfahren nach einem der vorangehenden Ansprüche,
**dadurch gekennzeichnet, dass**
- zeitlich parallel zur Authentifizierung der Knoten (31, 32a-c) mittels des Spannbaumprotokolls eine Rekonfigurierung des Kommunikationsnetzes (30) durchgeführt wird.

8. Verfahren nach einem der vorangehenden Ansprüche,
**dadurch gekennzeichnet, dass**
- die Authentifizierungsanfragen auch über solche Kommunikationsports übertragen werden, die entsprechend der Anwendung des Spannbaumprotokolls blockiert sind.

9. Verfahren nach einem der vorangehenden Ansprüche,
**dadurch gekennzeichnet, dass**
- die Knoten (31, 32a-c) je eine mit einem ersten Kommunikationsport (57a) über eine erste Portzugriffssteuereinheit (55a) verbundene erste Authentifizierungseinrichtung (56a) und je eine mit einem zweiten Kommunikationsport (57b) über eine zweite Portzugriffssteuereinheit (55b) verbundene zweite Authentifizierungseinrichtung (56b) aufweisen, wobei die jeweilige Authentifizierungseinrichtung (56a, 56b) die jeweilige Authentifizierungsanfrage erzeugt und über den mit ihr verbundenen Kommunikationsport (57a, 57b) aussendet.

10. Knoten (31, 32a-c) zum Anschluss an ein Kommunikationsnetz (30) einer Automatisierungsanlage, wobei das Kommunikationsnetz (30) mehrere Knoten (31, 32a-c) in Form von elektronischen Geräten (32a-c) mit jeweils zumindest zwei Kommunikationsports und mit Ethernet-Bridges (31) und umfasst und zur Ausführung eines Spannbaumprotokolls ausgebildet ist, bei dem zumindest einer der Knoten (31, 32a-c) angewiesen wird, in Abhängigkeit von einem Betriebszustand des Kommunikationsnetzes (30) zumindest einen seiner Kommunikationsports für den betriebsmäßigen Datenverkehr zu blockieren oder zu aktivieren;
**dadurch gekennzeichnet, dass**
- der Knoten (31, 32a-c) mit weiteren Knoten seiner Art zur Durchführung eines Verfahrens gemäß einem der vorigen Ansprüche 1 - 9 ausgebildet ist.

11. Knoten (31, 32a-c) nach Anspruch 10,
**dadurch gekennzeichnet, dass**
- der Knoten (31, 32a-c) eine mit einem ersten Kommunikationsport (57a) über eine erste Portzugriffssteuereinheit (55a) verbundene erste Authentifizierungseinrichtung (56a) und eine mit einem zweiten Kommunikationsport (57b) über eine zweite Portzugriffssteuereinheit (55b) verbundene zweite Authentifizierungseinrichtung (56b) aufweist, wobei die jeweilige Authentifizierungseinrichtung (56a, 56b) dazu ausgebildet ist, die jeweilige Authentifizierungsanfrage zu erzeugen und über den mit ihr verbundenen Kommunikationsport (57a, 57b) auszusenden.

12. Kommunikationsnetz (30) einer Automatisierungsanlage, wobei das Kommunikationsnetz (30) mehrere Knoten (31, 32a-c) in Form von Ethernet-Bridges (31) und elektronischen Geräten (32a-c) mit jeweils zumindest zwei Kommunikationsports aufweist und zur Ausführung eines Spannbaumprotokolls ausgebildet ist, bei dem zumindest einer der Knoten (31, 32a-c) angewiesen wird, in Abhängigkeit von einem Betriebszustand des Kommunikationsnetzes (30) zumindest einen seiner Kommunikationsports für den betriebsmäßigen Datenverkehr zu blockieren oder zu aktivieren, und wobei das Kommunikationsnetz (30) einen Authentifizierungsserver (34) aufweist;
**dadurch gekennzeichnet, dass**
- das Kommunikationsnetz (30) dazu ausgebildet ist, zur Authentifizierung eines Knotens (31, 32a-c) ein Verfahren gemäß einem der Ansprüche 1 bis 9 durchzuführen.

13. Kommunikationsnetz (30) nach Anspruch 12,
**dadurch gekennzeichnet, dass**
- der Knoten (31, 32a-c) entsprechend einem der Ansprüche 10 oder 11 ausgebildet ist.

## Claims

1. Method for authenticating nodes (31, 32a-c) of a communication network (30) of an automation installation, wherein
- respective authentication information indicating the nodes (31, 32a-c) is transmitted to an authentication server (34) and the authentication server (34) takes the authentication information as a basis for admitting or rejecting the nodes (31, 32a-c) in the communication network (30) as subscribers;
**characterized in that**
- the communication network (30) comprises multiple nodes (31, 32a-c) in the form of electronic devices (32a-c) having Ethernet bridges (31), each of which has at least two communication ports;
- at least two of the nodes (31, 32a-c) use their mutually facing communication ports to interchange authentication requests containing their respective authentication information;
- the at least two nodes (31, 32a-c) send the respective received authentication information to an authentication server (34) connected to the communication network (30);
- the authentication server (34) uses the respective received authentication information to perform a respective check on the authenticity of the respective node (31, 32a-c) and admits or rejects the respective node (31, 32a-c) in the communication network (30) as a subscriber as the result of the check, **characterized in that**
- the communication network (30) executes a spanning tree protocol, which involves at least one of the nodes (31, 32a-c) being instructed to take an operating state of the communication network (30) as a basis for blocking or activating at least one of its communication ports for the operational data traffic;
- the nodes (31, 32a-c) of the communication network (30) forward exclusively such messages as are used for authenticating a node (31, 32a-c) or for reconfiguring the communication network (30) according to the spanning tree protocol, even if they themselves are not fully authenticated.

2. Method according to Claim 1,
**characterized in that**
- to restore an interrupted communication connection between two nodes (31, 32a-c), those two nodes (e.g. 32a, 32b) that are arranged at the interruption location (36) use their mutually facing communication ports to interchange authentication requests containing their respective authentication information and send the respective received authentication information to the authentication server (34).

3. Method according to Claim 1,
**characterized in that**
- when a node (31, 32a-c) is switched on, the switched-on node (e.g. 32b) and its two adjacent nodes (e.g. 32a, 32c) use their mutually facing communication ports to interchange authentication requests containing their respective authentication information and send the respective received authentication information to the authentication server (34).

4. Method according to one of the preceding claims,
**characterized in that**
- the communication network (30) implements a spanning tree protocol according to the standard IEEE 802.1Q RSTP.

5. Method according to one of the preceding claims, **characterized in that**
- to check the authenticity of the nodes (31, 32a-c), the received authentication information is compared with reference authentication information and/or a certificate contained in the authentication information is checked for whether it is trusted; and
- the respective node (31, 32a-c) is admitted in the communication network (30) in the event of a match.

6. Method according to one of the preceding claims,
**characterized in that**
- a respective authentication response is sent to the respective node (31, 32a-c) as a reaction to the check, which response indicates whether or not the respective node (31, 32a-c) may admit a respective other node (31, 32a-c) in the communication network (30) for the purpose of communication.

7. Method according to one of the preceding claims,
**characterized in that**
- a reconfiguration of the communication network (30) is performed with parallel timing in relation to the authentication of the nodes (31, 32a-c) by means of the spanning tree protocol.

8. Method according to one of the preceding claims,
**characterized in that**
- the authentication requests are also transmitted via such communication ports as are blocked in accordance with the application of the spanning tree protocol.

9. Method according to one of the preceding claims,
**characterized in that**
- the nodes (31, 32a-c) each have one first authentication apparatus (56a), which is connected to a first communication port (57a) via a first port access control unit (55a), and one second authentication apparatus (56b), which is connected to a second communication port (57b) via a second port access control unit (55b), the respective authentication apparatus (56a, 56b) generating the respective authentication request and transmitting it via the communication port (57a, 57b) that is connected to it.

10. Node (31, 32a-c) for connection to a communication network (30) of an automation installation, wherein the communication network (30) comprises multiple nodes (31, 32a-c) in the form of electronic devices (32a-c), each having at least two communication ports and having Ethernet bridges (31), and is designed to execute a spanning tree protocol, which involves at least one of the nodes (31, 32a-c) being instructed to take an operating state of the communication network (30) as a basis for blocking or activating at least one of its communication ports for the operational data traffic;
**characterized in that**
- the node (31, 32a-c) is designed to perform a method according to one of preceding Claims 1 - 9 with other nodes of its type.

11. Node (31, 32a-c) according to Claim 10,
**characterized in that**
- the node (31, 32a-c) has a first authentication apparatus (56a), which is connected to a first communication port (57a) via a first port access control unit (55a), and a second authentication apparatus (56b), which is connected to a second communication port (57b) via a second port access control unit (55b), the respective authentication apparatus (56a, 56b) being designed to generate the respective authentication request and to transmit it via the communication port (57a, 57b) that is connected to it.

12. Communication network (30) of an automation installation, wherein the communication network (30) comprises multiple nodes (31, 32a-c) in the form of Ethernet bridges (31) and electronic devices (32a-c), each having at least two communication ports, and is designed to execute a spanning tree protocol, which involves at least one of the nodes (31, 32a-c) being instructed to take an operating state of the communication network (30) as a basis for blocking or activating at least one of its communication ports for the operational data traffic, and wherein the communication network (30) has an authentication server (34);
**characterized in that**
- the communication network (30) is designed to perform a method according to one of Claims 1 to 9 in order to authenticate a node (31, 32a-c).

13. Communication network (30) according to Claim 12,
**characterized in that**
- the node (31, 32a-c) is designed in accordance with either of Claims 10 and 11.

## Revendications

1. Procédé d'identification de noeuds (31, 32a-c) d'un réseau (30) de communication d'une installation d'automatisation, dans lequel
- on transmet une information d'authentification respective indiquant les noeuds (31, 32a-c) à un serveur (34) d'authentification et le serveur (34) d'authentification admet ou refuse, sur la base de l'information d'authentification, les noeuds (31, 32a-c) comme participants au réseau (30) de communication ; **caractérisé en ce que**
- le réseau (30) de communication comprend plusieurs noeuds (31, 32a-c) sous la forme d'appareils (32a-c) électroniques ayant des bridges (31) éthernet, qui ont chacun au moins deux accès de communication ;
- au moins deux des noeuds (31, 32a-c) échangent, par leurs accès de communication tournés les uns vers les autres, des demandes d'authentification contenant leurs informations d'authentification respectives ;
- les au moins deux noeuds (31, 32a-c) envoient l'information d'authentification reçue respective à un serveur (34) d'authentification relié au réseau (30) de communication ;
- le serveur (34) d'authentification effectue, à l'aide de l'information d'authentification reçue respective, respectivement un contrôle de l'authenticité du noeud (31, 32a-c) respectif et, en résultat du contrôle, admet ou refuse le noeud (31, 32a-c) respectif comme participant au réseau (30) de communication, **caractérisé en ce que**
- le réseau (30) de communication effectue un protocole d'arbre couvrant, dans lequel il est assigné à au moins l'un des noeuds (31, 32a-c), en fonction d'un état de fonctionnement du réseau (30) de communication, de bloquer ou d'activer au moins l'un de ses accès de communication pour la circulation des données en fonctionnement ;
- les noeuds (31, 32a-c) du réseau (30) de communication acheminent, même s'ils ne sont pas eux-mêmes authentifiés complètement, exclusivement les messages, qui servent à l'authentification d'un noeud (31, 32a-c) ou à la reconfiguration du réseau (30) de communication suivant le protocole d'arbre couvrant.

2. Procédé suivant la revendication 1,
**caractérisé en ce que**
- pour rétablir une liaison de communication interrompue entre deux noeuds (31, 32a-c), les deux noeuds (par exemple 32a, 32b), qui sont disposés à l'endroit (36) d'interruption, échangent, par leurs accès de communication tournés les uns vers les autres, des demandes d'authentification contenant leurs informations d'authentification respectives et envoient au serveur (34) d'authentification l'information d'authentification reçue respective.

3. Procédé suivant la revendication 1,
**caractérisé en ce que**
- lors de la mise en circuit d'un noeud (31, 32a-c), le noeud (par exemple 32b) mis en circuit et ses deux noeuds (par exemple 32a, 32c) voisins échangent, par leurs accès de communication tournés les uns vers les autres, des demandes d'authentification contenant leurs informations d'identification respectives et envoient au serveur (34) d'authentification l'information d'identification reçue respective.

4. Procédé suivant l'une des revendications précédentes,
**caractérisé en ce que**
- le réseau (30) de communication met en oeuvre un protocole d'arbre couvrant suivant la norme IEEE 802.1Q RSTP.

5. Procédé suivant l'une des revendications précédentes,
**caractérisé en ce que**
- pour le contrôle de l'authenticité des noeuds (31, 32a-c), on compare l'information d'authentification reçue à une information d'authentification de référence et/ou on contrôle qu'un certificat contenant l'information d'authentification est digne de confiance ; et
- s'il y a coïncidence, on admet le noeud (31, 32a-c) respectif dans le réseau (30) de communication.

6. Procédé suivant l'une des revendications précédentes,
**caractérisé en ce que**
- en réaction au contrôle, on envoie au noeud (31, 32a-c) respectif, une réponse d'authentification respective, qui indique si le noeud (31, 32a-c) respectif peut ou non admettre un autre noeud (31, 32a-c) respectif pour la communication dans le réseau (30) de communication.

7. Procédé suivant l'une des revendications précédentes,
**caractérisé en ce que**
- en parallèle dans le temps à l'authentification des noeuds (31, 32a-c), on effectue une reconfiguration du réseau (30) de communication au moyen du protocole d'arbre couvrant.

8. Procédé suivant l'une des revendications précédentes,
**caractérisé en ce que**
- l'on transmet les demandes d'authentification également par des accès de communication, qui sont bloqués conformément à l'application du protocole d'arbre couvrant.

9. Procédé suivant l'une des revendications précédentes,
**caractérisé en ce que**
- les noeuds (31, 32a-c) ont chacun un premier dispositif (56a) d'authentification relié à un premier accès (57a) de communication par une première unité (55a) de commande d'accès à l'accès et respectivement un deuxième dispositif (56b) d'authentification relié à un deuxième accès (57b) de communication par une deuxième unité (55b) de commande d'accès à l'accès, dans lequel le dispositif (56a, 56b) d'authentification respectif produit la demande d'authentification respective et l'envoie par l'accès (57a, 57b) de communication auquel il est relié.

10. Noeud (31, 32a-c) de connexion à un réseau (30) de communication d'une installation d'automatisation, dans lequel le réseau (30) de communication a plusieurs noeuds (31, 32a-c), sous la forme d'appareils (32a-c) électroniques ayant chacun au moins deux accès de communication et ayant des bridges (31) éthernet et comprend et est constitué pour l'exécution d'un protocole d'arbre couvrant, dans lequel il est assigné à au moins l'un des noeuds (31, 32a-c), en fonction d'un état de fonctionnement du réseau (30) de communication, de bloquer ou d'activer au moins l'un de ses accès de communication pour la circulation des données en fonctionnement ;
**caractérisé en ce que**
- le noeud (31, 32a-c) est, avec d'autres noeuds de son type, constitué pour effectuer un procédé suivant l'une des revendications 1 à 9 précédentes.

11. Noeud (31, 32a-c) suivant la revendication 10,
**caractérisé en ce que**
- le noeud (31, 32a-c) a un premier dispositif (56a) d'authentification relié à un premier accès (57a) de communication par une première unité (55a) de commande d'accès à l'accès et respectivement un deuxième dispositif (56b) d'authentification relié à un deuxième accès (57b) de communication par une deuxième unité (55b) de commande d'accès à l'accès, dans lequel le dispositif (56a, 56b) d'authentification respectif est constitué pour produire la demande d'authentification respective et pour l'envoyer par l'accès (57a, 57b) de communication auquel il est relié.

12. Réseau (30) de communication d'une installation d'automatisation, dans lequel le réseau (30) de communication a plusieurs noeuds (31, 32a-c) sous la forme de bridges (31) éthernet et des appareils (32a-c) électroniques ayant chacun au moins deux accès de communication et est constitué pour la réalisation d'un protocole d'arbre couvrant, dans lequel il est assigné à au moins l'un des noeuds (31, 32a-c), en fonction d'un état de fonctionnement du réseau (30) de communication, de bloquer ou d'activer au moins l'un de ses accès de communication pour la circulation des données en fonctionnement, et dans lequel le réseau (30) de communication a un serveur (34) d'authentification ;
**caractérisé en ce que**
- le réseau (30) de communication est constitué pour effectuer et pour l'authentification d'un noeud (31, 32a-c) un procédé suivant l'une des revendications 1 à 9.

13. Réseau (30) de communication suivant la revendication 12,
**caractérisé en ce que**
- le noeud (31, 32a-c) est constitué conformément à l'une des revendications 10 ou 11.
